Europäisches Patentamt

European Patent Office

Office européen des brevets

(11) Publication number: **0 441 552 B1**

## EUROPEAN PATENT SPECIFICATION

(45) Date of publication of patent specification: **22.03.95**  (51) Int. Cl.⁶: **B60C 19/12**

(21) Application number: **91300851.2**

(22) Date of filing: **01.02.91**

(54) Tyre and rim assembly for motorcycles.

(30) Priority: **05.02.90 JP 25865/90**
**06.04.90 JP 92904/90**

(43) Date of publication of application:
**14.08.91 Bulletin 91/33**

(45) Publication of the grant of the patent:
**22.03.95 Bulletin 95/12**

(84) Designated Contracting States:
**DE FR GB IT**

(56) References cited:
**FR-A- 1 096 438       FR-A- 2 639 880**
**GB-A- 2 024 118       NL-A- 7 812 531**
**US-A- 2 154 828       US-A- 3 100 518**

(73) Proprietor: **SUMITOMO RUBBER INDUSTRIES
LIMITED
1-1 Tsutsuicho 1-chome
Chuo-ku
Kobe-shi
Hyogo-ken (JP)**

(72) Inventor: **Sakuno, Tetsuya
732-46 Hiratsu,
Yonedacho
Kakogawa-shi,
Hyogo-ken (JP)**

(74) Representative: **Stewart, Charles Geoffrey
SP TYRES UK LIMITED
Technical Division
Fort Dunlop,
Erdington,
Birmingham B24 9OT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present invention relates to a tyre and rim assembly for motorcycles, in which the inner tube of the tyre is prevented from being punctured without sacrificing dynamic performance of the tyre.

In motorcycle tyres, when running off-the-road, upon stony roads, or when jumping high for example in motocross competition, in order to prevent puncture of the inner tube, the following means have been employed:

1) To increase the inner pressure of the tube

2) To increase the thickness of the tube

3) To use a doubled tube

4) To use a lubricant.

However, it is difficult to completely prevent puncture of the tube by such means, and these means also deteriorate the tyre performance factors such as road grip, handling, running stability, ride comfort, response and the like.

A tyre and rim assembly wherein the tyre has a buffer layer between the tyre and tube comprising a single layer of spongelike material according to the preamble of claim 1 is known for example from Patent Publication NL-A-7812531. Also a tyre having a buffer layer consisting of two layers of material wherein the inner layer is a spongelike material is known from Patent Publication FR-A-1096438.

It is therefore an object of the present invention to provide a tyre and rim assembly for motorcycles, in which the inner tube is prevented from being punctured, while maintaining the dynamic performance factors such as steering stability and ride comfort.

According to the present invention, a tyre and rim assembly comprise a tyre, a standard rim on which the tyre is mounted, an inner tube disposed in a chamber formed and enclosed by the tyre and the rim, an annular buffer layer disposed in said chamber between the tyre and the tube and extending from the tyre equator towards each side thereof to a position adjacent to each bead of the tyre so that each edge of the buffer layer is terminated at said position, said buffer layer being made of spongelike material and having a thickness distribution such that the thickness at the tyre equator is larger than the thickness at the edges characterised in that the buffer layer comprises an inner layer to contact the tube and an outer layer to contact the tyre, and the outer layer is softer than the inner layer and the JIS C hardness of the outer layer is 35 to 45, and the JIS C hardness of the inner layer is 45 to 55.

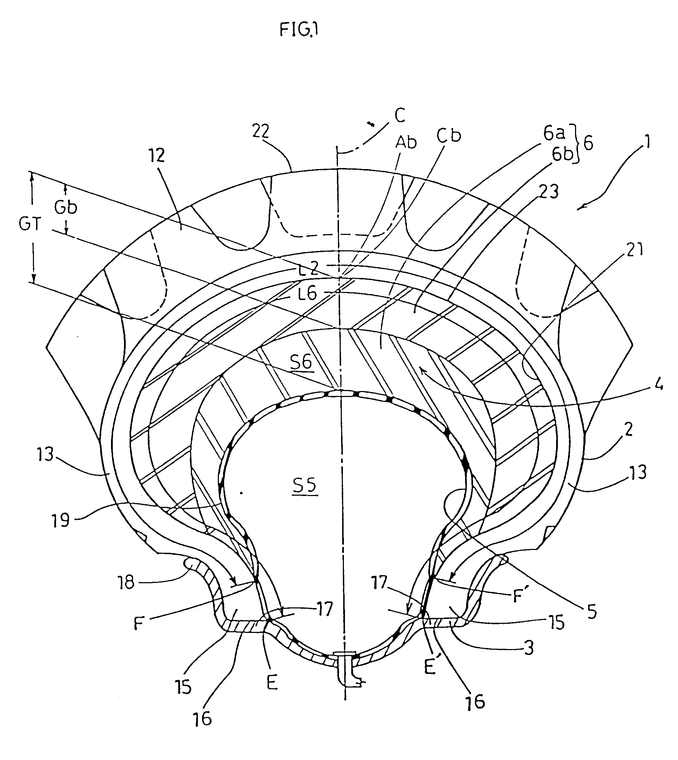

An embodiment of the present invention will now be described in detail with reference to the drawing of Figure 1 which shows a cross-sectional view of a tyre and wheel assembly.

The motorcycle tyre and rim assembly 1 comprises a tyre 2, a standard rim 3 on which the tyre is mounted, an air retaining inner tube 5 disposed in a tyre inner chamber 4 within the tyre and rim, and a buffer layer 6 disposed between the tyre and the tube 5.

The tyre 2 has a tread 12, a pair of axially spaced apart bead portions 15, and a pair of sidewalls 13 extending radially inwardly from the tread edges to the bead portions so that the tyre 2 has a toroidal shape.

The rim 3 has a pair of axially spaced bead seats 17 on which the bead portions 15 of the tyre are respectively seated, a pair of flanges 18 extending radially outwardly from the axially outer edges of the bead seats 17, and a well for tyre mounting formed between the bead seats 17.

The mounted tyre 2 on the rim 3 forms a closed chamber 4. In this chamber 4, an inner tube 5 is positioned.

Figure 1 shows an embodiment of the present invention in which the buffer layer 6 is made of a double layered material, an inner layer 6a and an outer layer 6b. Each of the inner and outer layers 6a and 6b is made of sponge rubber having closed cells.

The JIS C hardness of the outer layer 6b is 35 to 45, and the JIS C hardness of the inner layer 6a is 45 to 55. Accordingly, the outer layer 6b is softer than the inner layer 6a. Five different recipes A-E for these sponge rubbers are given in Table 1.

The ratio Gb/GT of the thickness Gb of the outer layer 6b to the total thickness GT of the buffer layer, both measured at the tyre equator, is not less than 0.4 and not more than 0.7.

If the ratio Gb/GT is made less than 0.4, the elasticity of the buffer layer is too small, and handling stability and shock absorbing power are spoilt.

If the ratio Gb/GT is more than 0.7, the reinforcement to the tube 5 and prevention of punctures become insufficient.

The inner buffer layer 6a extends from the tyre equator C each side thereof to a position axially inwardly and adjacent to each bead portion of the tyre. Also the edge portions of the inner buffer layer 6a are directly in contact with the inside of the tyre. Accordingly, the outer buffer layer 6b is in a space enclosed by the inside of the tyre and the outside of the inner buffer layer 6a.

The inner layer and the outer layer are adhered to each other.

The expansion ratio of the sponge rubber is set to be not less than 4 (400%) and not more than 15 (1500%).

If the ratio is less than 4, the buffer layer has less cushion or shock absorbing power, and the resistance to puncture is too small.

If the ratio is more than 15, the buffer layer becomes excessively soft, and as a result, the thickness of the buffer layer is greatly decreased by applied pressure, and the shock absorbing power is decreased to too low a level.

The buffer layer 6 is positioned inside the tyre so that the outer surface 23 of the buffer layer 6 contacts the inner surface 21 of the tyre, and the buffer layer 6 extends from the tyre equator C towards each side and around the tyre section to a position adjacent to each bead 15.

In a cross-section of the assembly including the tyre axis, under an inflated condition in which the tube 5 is inflated to a pressure corresponding to the regular inner pressure for the tyre 2, the buffer layer 6 is arranged to have a volume such that the ratio S6/S5 of the cross-sectional area S6 of the buffer layer 6 to the cross-sectional area S5 of the tube enclosed by the outer surface 19 of the tube is not less than 3/7 (0.42) and not more than 1.5.

If the ratio S6/S5 is less than 3/7 (0.42) the shock absorbing power of the buffer layer 6 becomes too small, and puncture is not effectively prevented.

If the ratio is more than 1.5, running performance factors for example steering stability are impaired.

Further, the thickness of the buffer layer 6 decreases gradually from its centre at the tyre equator to its radially inner edges F and F' adjacent to the bead portions.

For one allowed modification to the buffer layer, the thickness thereof can be set to be substantially constant in the portion adjacent to the tread portion 12 of the tyre. Then the thickness decreases gradually in the portions axially inwardly of the tread adjacent to each of the sidewall portions of the tyre extending from a position near each of the tread edges to the radially inner edges F and F'.

In a natural state with the tyre not inflated and the buffer layer free from pressure, the size of the buffer layer 6 is set to be not larger than that of the inside of the tyre, and further the ratio Ab/Cb of the circumference Ab of the outer surface of the buffer layer 6 to the circumference Cb of the inner surface 21 of the tyre, both measured at the tyre equator C, is set to be not less than 0.6 and not more than 1.0.

If the ratio Ab/Cb is made less than 0.6, it becomes difficult for the buffer layer to contact the tyre at the tyre equator C even when the tube is filled with air, and in the worst case the inside of the tyre 2 is not pressurised.

If the ratio Ab/Cb is more than 1.0, the buffer layer 6 has a surplus portion when inserted in the tyre chamber, and the buffer layer is compressed in the regions around the tyre equator C to decrease its volumes and thus to lose its softness. As a result, the buffer effect thereof is lowered.

Further, the buffer layer 6 then becomes wrinkled, which disturbs the uniform insertion or positioning of the buffer layer 6.

Further, in a cross-section of the assembly including the tyre axis under the above-mentioned natural state, the ratio L2/L6 of the length L2 measured along the outer surface 23 of the buffer layer 6 from one edge F to the other edge F' to the length L6 measured along the inner surface 21 of the tyre 2 from one edge E to the other edge E' is preferably not less than 0.8 and not more than 0.9.

As the inside of the buffer layer 6 is pressurised by the inflation of the tube 5, the buffer layer is liable to be elongated.

If the ratio L2/L6 is more than 0.9, the edges F and F' of the buffer layer are moved towards the edges E and E' of the bead portions, and/or the layer is deformed non-uniformly. As a result, the tube 5 is apt to be wrinkled, making a partial deformation.

If the ratio L2/L6 is less than 0.8, the tube 5 directly contacts the tyre at the bead portions and possible also the lower sidewall portions. In other words, the buffer layer is not positioned between the tyre and the tube in the regions in which large deformation occurs repeatedly during running. Therefore, the tube 5 is apt to be pinched and bent abruptly by the tyre and this is a danger of the tube being punctured.

To show the effectiveness of the invention test tyres including Working Example tyres 6-9 having the above-explained tyre construction shown in Figure 1, and Reference tyres 2-5 having the same construction except for the buffer layer were made and tested for dynamic performance and durability. The specifications of these tyres are given in Tables 1 and 2.

The test results are also given in Table 2.

In the tests, the motorcycle used was of a motocross type, and it was equipped with tyres having different tyre sizes. The tyre size for the front wheel was 80/100-21, and that for the rear wheel was 110/90-19.

While running on a stony motocross road, the following tests were made.

A. Dynamic performance tests

On each test tyre, handling, straight running stability, cornering stability, shock absorbing performance, and ride comfort were evaluated into five ranks by a skilled rider's feelings.

In Table 2, the larger the value the better the performance, and the standard of the performance is 2.5.

B. Resistance to puncture test

For resistance to puncture, the number of punctures which occurred after three two hour test runs on a stony motocross road was noted.

According to the test results, puncture of the tube was effectively prevented in all of the Working Example tyres, but in the Reference tyre the tubes were punctured twice. Further, in the Working Example tyres no decrease in dynamic performance occurred.

As described above, in the assemblies according to the present invention, the buffer layer made of a spongelike material is disposed between the tyre and the tube. Puncture of the tube is effectively prevented, without sacrificing dynamic performance such as steering stability, ride comfort and the like.

TABLE 1

| Composition | A | B | C | D | E |
|---|---|---|---|---|---|
| Diene NF35R | 40 | 40 | 40 | 40 | 40 |
| NR | 50 | 50 | 50 | 50 | 50 |
| High styrene rubber | 10 | 10 | 10 | 10 | 10 |
| Accelerator | 1.8 | 1.8 | 1.8 | 1.8 | 1.8 |
| Sulfur | 3.5 | 3.5 | 3.5 | 3.5 | 3.5 |
| Zinc oxide | 6 | 6 | 6 | 6 | 6 |
| Stearic acid | 2 | 2 | 2 | 2 | 2 |
| D.P.T. | 16 | 4 | 12 | 3.5 | 6.5 |
| Paste K4 | 16 | 4 | 12 | 3.5 | 6.5 |
| Coumarone resin | 5 | 5 | 5 | 5 | 5 |
| Naphthenic oil | 30 | 30 | 30 | 30 | 30 |
| Nipsil VN3 | 10 | 10 | 10 | 10 | 10 |
| Clay | 20 | 20 | 20 | 20 | 20 |
| Activated calcium carbonate 0 | 80 | 80 | 80 | 80 | 80 |
| MSK-C | 20 | 20 | 20 | 20 | 20 |
| Talc | 20 | 20 | 20 | 20 | 20 |
| Soft calcium carbonate | 20 | 20 | 20 | 20 | 20 |
| DFG | 1 | 1 | 1 | 1 | 1 |
| Total | 351.3 | 327.3 | 333.3 | 326.3 | 332.3 |
| JIS C hardness | 35 | 55 | 45 | 57 | |

TABLE 2

| Assembly | Ex.6 | Ex.7 | Ex.8 | Ex.9 | Ref.2 | Ref.3 | Ref.4 | Ref.5 |
|---|---|---|---|---|---|---|---|---|
| Buffer Layer | double | double | double | double | single | non | double | double |
| Composition(outside/inside) | A/B | C/B | A/C | C/B | - | - | A/B | C/B |
| Gb/GT ratio | 0.4 | 0.7 | 0.5 | 0.6 | - | - | 0.3 | 0.8 |
| S6/S5 ratio | 0.43 | 1.5 | 0.76 | 0.93 | 0.52 | - | 0.65 | 0.65 |
| Ab/Cb ratio | 0.6 | 1.0 | 0.7 | 0.8 | 0.9 | - | 1.0 | 0.9 |
| L6/L2 ratio | 0.8 | 0.9 | 0.8 | 0.9 | 0.7 | - | 1.0 | 0.9 |
| Dynamic performance | | | | | | | | |
| Handling | 3.5 | 3 | 3.5 | 3 | 2.5 | 3.5 | 2.5 | 3.5 |
| Straight running stability | 3.5 | 3 | 3 | 2.5 | 2.5 | 3 | 2.5 | 3 |
| Cornering stability | 4 | 4 | 3 | 3 | 3 | 3 | 3 | 3 |
| Shock absorbing | 3 | 3 | 3 | 3 | 3 | 3 | 3 | 3 |
| Ride comfort | 3 | 3 | 2.5 | 3 | 3 | 3 | 3 | 3 |
| Puncture | 0 | 0 | 0 | 0 | 0 | 2 times | 0 | 2 times |

**Claims**

1.  A tyre and rim assembly comprising a tyre (2), a standard rim (3) on which the tyre (2) is mounted, an inner tube (5) disposed in a chamber (4) formed and enclosed by the tyre (2) and the rim (3), an annular buffer layer (6) disposed in said chamber (4) between the tyre (2) and the tube (5) and extending from the tyre equator (C) towards each side thereof to a position adjacent to each bead (15) of the tyre so that each edge (F,F') of the buffer layer is terminated at said position, said buffer layer (6) being made of spongelike material and having a thickness distribution such that the thickness at the tyre equator (C) is larger than the thickness at the edges (F,F') characterised in that the buffer layer (6) comprises an inner layer (6a) to contact the tube (5) and an outer layer (6b) to contact the tyre (2), and the outer layer (6b) is softer than the inner layer (6a) and the JIS C hardness of the outer layer (6a) is 35 to 45, and the JIS C hardness of the inner layer (6b) is 45 to 55.

2. An assembly according to claim 1, characterised in that the ratio (Gb/GT) of the thickness (Gb) of the outer buffer layer (6b) to the total thickness (GT) of the buffer layer (6), both measured at the tyre equator (C), is not less than 0.4 and not more than 0.7.

3. An assembly according to either of claims 1 or 2, characterised in that in an inflated condition in which the tube (5) is inflated to a pressure corresponding to the regular inner pressure for the tyre, the ratio (S6/S5) of the cross-sectional area (S6) of the buffer layer (6) to the cross-sectional area (S5) of the tube (5) enclosed by the outer surface of the tube (5) is not less than 3/7 (0.42) and not more than 1.5.

4. An assembly according to either of claims 1 or 2 characterised in that in a natural state when the tyre is not inflated and the buffer layer (6) is free from pressure, the ratio (Ab/Cb) of the circumference (Ab) of the outer surface of the buffer layer (6) to the circumference (Cb) of the inner surface of the tyre (2), both measured at the tyre equator (C), is not less than 0.6 and not more than 1.0.

5. An assembly according to claim 4, characterised in that the ratio (L2/L6) of the length (L2) measured along the outer surface (23) of the buffer layer (6) from one edge (F) to the other edge (F') to the length (L6) measured along the inner surface (21) of the tyre (2) from one edge (E) to the other edge (E') is not less than 0.8 and not more than 0.9.

6. An assembly according to either of claims 1 or 2 characterised in that the buffer layer (6) is made of sponge rubber having closed cells and the expansion ratio of the sponge rubber is not less than 400% and not more than 1500%.

**Patentansprüche**

1. Eine Reifen- und Felgenanordnung mit einem Reifen (2), einer standardmäßigen Felge (3), auf welcher der Reifen (2) montiert ist, einem Schlauch (5), der in einer durch den Reifen (2) und die Felge (3) gebildeten und umschlossenen Kammer (4) angeordnet ist, einer ringförmigen Pufferschicht (6), die in der Kammer (4) zwischen dem Reifen (2) und dem Schlauch (5) angeordnet ist und sich vom Reifenäquator (C) zu jeder Seite davon zu einer Position benachbart jedem Wulst (15) des Reifens erstreckt, so daß jede Kante (F, F') der Pufferschicht an dieser Position endet, wobei die Pufferschicht (6) aus schwammartigem Material besteht und eine Dickenverteilung derart aufweist, daß die Dicke am Reifenäquator (C) größer als die Dicke an den Kanten (F, F') ist,
**dadurch gekennzeichnet,**
daß die Pufferschicht (6) eine innere Schicht (6 a), um den Schlauch (5) zu berühren, und eine äußere Schicht (6 b) umfaßt, um den Reifen (2) zu berühren, die äußere Schicht (6 b) weicher als die innere Schicht (6 a) ist, die JIS-C-Härte der äußeren Schicht (6 a) 35 bis 45 und die JIS-C-Härte der inneren Schicht (6 b) 45 bis 55 beträgt.

2. Eine Anordnung nach Anspruch 1,
**dadurch gekennzeichnet,**
daß das Verhältnis (Gb/GT) der Dicke (Gb) der äußeren Pufferschicht (6 b) zur Gesamtdicke (GT) der Pufferschicht (6), beides am Reifenäquator (C) gemessen, nicht weniger als 0,4 und nicht mehr als 0,7 beträgt.

3. Eine Anordnung nach Anspruch 1 oder 2,
**dadurch gekennzeichnet,**
daß in einem aufgepumpten Zustand, in welchem der Schlauch (5) auf einen Druck entsprechend dem regulären Innendruck für den Reifen aufgepumpt ist, das Verhältnis (S 6/S 5) der Querschnittsfläche (S

EP 0 441 552 B1

6) der Pufferschicht (6) zur Querschnittsfläche (S 5) des Schlauchs (5), die durch die äußere Oberfläche des Schlauchs (5) umschlossen ist, nicht weniger als 3/7 (0,42) und nicht mehr als 1,5 beträgt.

4. Eine Anordnung nach Anspruch 1 oder 2,
   **dadurch gekennzeichnet,**
   daß in einem natürlichen Zustand, wenn der Reifen nicht aufgepumpt und die Pufferschicht (6) frei von Druck ist, das Verhältnis (Ab/Cb) des Umfangs (Ab) der äußeren Oberfläche der Pufferschicht (6) zum Umfang (Cb) der inneren Oberfläche des Reifens (2), beides am Reifenäquator (C) gemessen, nicht weniger als 0,6 und nicht mehr als 1,0 beträgt.

5. Eine Anordnung nach Anspruch 4,
   **dadurch gekennzeichnet,**
   daß das Verhältnis (L 2/L 6) der Länge (L 2), gemessen entlang der äußeren Oberfläche (23) der Pufferschicht (6) von der einen Kante (F) zur anderen Kante (F'), zur Länge (L 6), gemessen entlang der inneren Oberfläche (21) des Reifens (2) von der einen Kante (E) zur anderen Kante (E'), nicht weniger als 0,8 und nicht mehr als 0,9 beträgt.

6. Eine Anordnung nach Anspruch 1 oder 2,
   **dadurch gekennzeichnet,**
   daß die Pufferschicht (6) aus Schaumgummi mit geschlossenen Zellen besteht und das Expansionsverhältnis des Schaumgummis nicht weniger als 400 % und nicht mehr als 1500 % beträgt.

**Revendications**

1. Ensemble à jante et pneumatique, comprenant un pneumatique (2), une jante normale (3) sur laquelle est monté le pneumatique (2), une chambre à air interne (5) disposée dans un volume (4) formé et enfermé dans le pneumatique (2) et la jante (3), une couche tampon annulaire (6) disposée dans le volume (4) entre le pneumatique (2) et la chambre à air (5) et allant de l'équateur (C) du pneumatique vers chaque côté vers une position adjacente à chaque talon (15) du pneumatique, afin que chaque bord (F, F') de la couche tampon se termine à ladite position, la couche tampon (6) étant formée d'un matériau spongieux et ayant une distribution d'épaisseur telle que l'épaisseur à l'équateur (C) du pneumatique est supérieure à l'épaisseur aux bords (F, F'), caractérisé en ce que la couche tampon (6) comporte une couche interne (6a) destinée à être au contact de la chambre à air (5) et une couche externe (6b) destinée à être au contact du pneumatique (2), et la couche externe (6b) est plus souple que la couche interne (6a), la dureté JIS C de la couche externe (6a) étant comprise entre 35 et 45 et la dureté JIS C de la couche interne (6b) étant comprise entre 45 et 55.

2. Ensemble selon la revendication 1, caractérisé en ce que le rapport (Gb/GT) de l'épaisseur (Gb) de la couche tampon externe (6b) et de l'épaisseur totale (GT) de la couche tampon (6), les deux épaisseurs étant mesurées à l'équateur (C) du pneumatique, n'est pas inférieur à 0,4 ni supérieur à 0,7.

3. Ensemble selon l'une des revendications 1 et 2, caractérisé en ce que, à l'état gonflé dans lequel la chambre à air (5) est gonflée à une pression correspondant à la pression interne normale du pneumatique, le rapport (S6/S5) de la section (S6) de la couche tampon (6) à la section (S5) de la chambre à air (5) enfermée par la surface externe de la chambre à air (5), n'est pas inférieur à 3/7 (0,42) ni supérieur à 1,5.

4. Ensemble selon l'une des revendications 1 et 2, caractérisé en ce que, à l'état libre dans lequel le pneumatique n'est pas gonflé et la couche tampon (6) est dépourvue de toute pression, le rapport (Ab/Cb) de la circonférence (Ab) de la surface externe de la couche tampon (6) à la circonférence (Cb) de la surface interne du pneumatique (2), toutes deux mesurées à l'équateur (C) du pneumatique, n'est ni inférieur à 0,6 ni supérieur à 1,0.

5. Ensemble selon la revendication 4, caractérisé en ce que le rapport (L2/L6) de la longueur (L2) mesurée le long de la surface externe (23) de la couche tampon (6), d'un bord (F) à l'autre bord (F'), et de la longueur (L6) mesurée le long de la surface interne (21) du pneumatique (2) d'un bord (E) à l'autre bord (E') n'est pas inférieur à 0,8 ni supérieur à 0,9.

7

6. Ensemble selon l'une des revendications 1 et 2, caractérisé en ce que la couche tampon (6) est formée d'un caoutchouc spongieux ayant des cellules fermées, et le rapport de dilatation du caoutchouc spongieux n'est ni inférieur à 400 % ni supérieur à 1 500 %.

FIG.1